# EUROPÄISCHE PATENTANMELDUNG

(11) **EP 0 983 873 A1**
(43) Veröffentlichungstag der Anmeldung: **08.03.2000**
(21) Anmeldenummer: 98928675.2
(22) Anmeldetag: 24.04.1998
(51) Int. Cl.: B44C 1/22, B44B 1/02, H04N 1/036

(54) **METHODE ZUR HERSTELLUNG EINES GEGENSTANDES VON EINEM MODELL AUSGEHEND UND VORRICHTUNG ZUR HERSTELLUNG DESSELBEN**

(30) Priorität: 14.05.1997 RU 97107039
(71) Anmelder: Gamarnik, Vladimir Ivanovich, Moscow, 115516 (RU)
(72) Erfinder: Gamarnik, Vladimir Ivanovich, Moscow, 115516 (RU)
(74) Vertreter: Ebbinghaus, Dieter, Dipl.-Ing.
(86) Internationale Anmeldenummer: RU9800121
(87) Internationale Veröffentlichungsnummer: WO9851517

(57) **Zusammenfassung**

Die vorliegende Erfindung ist zur Faksimileübertragung des Bildes einer Vorlage auf harte Materialien unter Erzielung eines Reliefbildes bestimmt. Das erfindungsgemäß vorgeschlagene Verfahren zur Herstellung von Erzeugnissen nach Muster besteht in der zeilenweisen Abtastung der Vorlagenoberfläche, in der Bildung von verstärkten Signalen, die zu einer optischen Dichte proportional sind, welche den Abstufungen der Halbtöne der Vorlage-Kenndaten entspricht, in der Umschaltung der Signale zur Wahl einer Halbtonabstufung, in der Frequenzmodulation der Signale zur Bestimmung der Ansprechfrequenz des Werkzeuges in der gewählten Abstufung, in der Amplitudenmodulation der Signale unter Bestimmung der oberen und der unteren Schwelle des Amplitudenbereiches, welche der maximalen und der minimalen Abstufung der Halbtöne entsprechen, und in der Umwandlung der erhaltenen Signale in Bewegungen des Werkzeuges in drei zueinander senkrechten Richtungen und dessen Eindringen in die Werkstückoberfläche zur Bildung eines Erzeugnisses, das eine Kopie der Vorlage ist. Die Vorrichtung zur Durchführung des erfindungsgemäßen Verfahrens enthält eine Leseeinheit für Vorlagenbild, die mit der elektromechanischen Baugruppe des Werkzeuges mittels eines Leistungsverstärkers, eines Amplitudenmodulators mit einem Regler der oberen und der unteren Schwelle des Amplitudenbereiches, mittels eines Frequenzmodulators von auf der elektromechanischen Baugruppe ankommenden Impulsen und eines elektronischen Mehrkanal-Umschalters elektrisch verbunden ist.

## Beschreibung

### Technisches Gebiet

Die vorliegende Erfindung bezieht sich auf Mittel zur künstlerischen Ausführung der Kopien von Erzeugnissen, insbesondere auf ein Verfahren und eine Vorrichtung zur Herstellung von Erzeugnissen nach Muster.

Am effektivsten kann diese Erfindung zur Faksimileübertragung des Bildes einer Vorlage auf harts Träger unter Erzielung eines Reliefbildes angewendet werden. Die vorliegende Erfindung kann in der steinverarbeitenden Industrie, Textilindustrie, polygrafischen, holzverarbeitenden Industrie, Leichtindustrie sowie in der Schmuckwarenbranche und bei Dienstleistungen zu familiären Ereignissen und nationalen Bräuchen mit Erfolg angewendet werden. Nach verschiedenen Methoden lassen sich Erzeugnisse herstellen, die Kopien von Bildern, von Text- und komplizierten grafischen Formen sind, weiche auf flache, zylindrische, sphärische und andere Oberflächen von Erzeugnissen aus Metall, Stein, Graphiten, Glas, Holz und Verbundwerkstoffen aufgetragen werden.

### Zugrundeliegender Stand der Technik

Zur Zeit sind verschiedene Verfahren und Vorrichtungen bekannt, die zur Herstellung unterschiedlicher Erzeugnisse nach Muster verwendet werden. Beispielsweise sind ein Verfahren und eine Vorrichtung zur Steuerung eines Gravierapparates bekannt (SU, A, 785058). Bei dieser Vorrichtung wird vor einem Lese-Lichtkopf die Vorlage einer Zeichnung bewegt, die durch einen Schneidkopf auf eine Walze als Strichgravüre übertragen wird. Dieser Lichtkopf ist mit seinem Ausgang an die Eingänge zweier Kanäle gelegt. Diese Kanäle sind an zwei Eingänge eines Verstärkers angeschlossen, weicher mit seinem Ausgang an den Eingang des Schneidkopfes gelegt ist. Der erste Kanal dient zum Auftragen der Strichgravüre der Vorlage auf die Walze. Sein an den Lichtkopf angeschlossener Eingang ist ein Differentialmodulator mit Verstärker, elektronischem Schalter und Leistungsverstärker. Als Ergebnis wird der Fotostrom des Lichtkopfes in eine Serie von Stromimpulsen umgeformt, deren Frequenz und Dauer von einem Rastergeber vorgegeben wird. Diese Stromimpulse werden den ersten Eingang des Leistungsverstärkers und dem Schneidkopf zugeführt.

Der zweite Kanal dient zur Erzeugung von Eingrenzungssignalen. Sein an den Lichtkopf angeschlossener Eingang ist ein Zweischwellen-Komparator, dessen untere und obere Ansprechschwelle durch Potentiometer so eingestellt werden, daß der Komparator zwischen dem "weißen" und den "schwarzen" Wert des Vorlagenfeldes anspricht. Bei Werten des Signals vom Lichtkopf in der Von-bis-Spanne der vorgegebenen Schwellenwerte des Komparators schaltet der letztere einen Schalter ein, der mit seinem ersten Ausgang den ersten Kanal ausschaltet und mit seinem zweiten Ausgang ein Signal vorn Multivibrator in Form eines Impulses durchläßt, welcher nach Frequenz und Amplitude regelbar und durch einen Trägerfrequenzmodulator moduliert ist. Der Impuls wird dem zweiten Eingang des Verstärkers und dem Schneidkopf zugeführt.

Bei den genannten Verfahren und Vorrichtung fehlt die Abhängigkeit der Bewegungsfrequenz des ausführenden Mechanismus vom Fotostromsignal, weiche zur Qualitätsminderung beim Gravieren von Halbtönen sowie dazu führt, daß ein FaksimileBild der Vorlage auf den Werkstück unmöglich zu erhalten ist. Außerdem fehlt die Möglichkeit zur Anpassung an die Qualität eines Fotos und dessen Härtegrad, was den Umwandlungsbereich von zum Werkzeug gelangenden Signalen drastisch herabsetzt oder aine Vorlage mit hoher Qualität erfordert.

Bekannt sind ein Verfahren und eine Vorrichtung zur Herstellung von Erzeugnissen nach Muster (SU, A, 1738685), die als Prototyp gewählt sind und einen als Rißplatte ausgebildeten Untersatz zur Aufnahme eines zu bearbeitenden Steines (eines Werkstücks) und einen Spindelantrieb für einen Wagen mit Elektromotor enthalten. An dem Wagen ist ein Elektromotor mit Lenker-Schraubenmotor installiert. Am Lenker sind ein Vibrator mit Werkzeug sowie eine lichtelektrische Leseeinheit montiert, die aine Lichtquelle, einen Fotoempfänger und Fokussierlinsen enthält. Der Ausgang des Fotoempfängers ist über einen Verstärker an einen Steuereingang eines Amplitudenmodulators angeschlossen, an dessen anderen Steuereingang der Vibrator gelegt ist. Somit ist die lichtelektrische Einheit mit dem Werkzeug kinematiech verbunden und an einem Koordinaten-Abtastantrieb befestigt.

Beim Einschalten der Elektromotoren wird eine zeilenweise Abtastung der Oberfläche der Zeichnung (der Vorlage) durch einen optischen Wandler, d.h. die lichtelektrische Einheit, und der Oberfläche des Steines (des Werkstücks) durch den Vibrator mit Werkzeug sichergestellt.

Die zeilenweise Abtastung ist das Resultat eines Geschwindigkeitsverhältnisses: die Bewegungsgeschwindigkeit des Werkzeuges und der lichtelektrischen Einheit übersteigt mehrfach die Bewegungsgeschwindigkeit längs der anderen Koordinate.

Gleichzeitig gelangt das Licht, welches von der Oberfläche der Zeichnung reflektiert wird, auf den Fotoempfänger, und auf diese Weise ist der Signalpegel am Ausgang der lichtelektrischen Einheit proportional zum Reflexionsvermögen der Vorlage. Dieses Signal steuert die Amplitude der Werkzeugvibrationen, deren Frequenz konstant ist.

Die genannten Verfahren und Vorrichtung gewährleisten jedoch keihe Änderung der Frequenz der Vibratorarbeit bei einer Änderung des Signals am Ausgang der lichtelektrischen Einheit, was die Qualität der Durchzeichnung von Halbtönen vermindert.

Bekanntlich wird der Pegel eines von einem Schwarzweiß-Bild erhaltenen Videosignals durch die optische Dichte von fünfzehn Abstufungen des Halbtonkeils bestimmt (siehe z.B. "Sovetsky entsiklopedichesky slovar" /Sowjetisches Lexikon/, Verlag "Sovetskaya entsiklopedia" (Moskau), S. 103, 1985). Die Übertragung dieses Bildes auf die Werkstückoberfläche mittels der bekannten Vorrichtung erfolgt durch Stoßen in Form von Punkten. Dabei ist für jede Halbtonabstufung erforderlich:
- bei konstanter Punktzahl - unterschiedlicher Durchmesser der Punkte (unterschiedliche Stoßamplitude);
- bet konstantem Punktdurchmesser - unterschiedliche Zahl (oder unterschiedlicher Abstand) der Punkte (Stoßfrequenz). Die vorgenannten bekannten Verfahren und Vorrichtung gewährleisten jedoch lediglich eine Änderung der Stoßamplitude. Außerdem ist des Stoßen für spröde Materialien (Stein, Gußeisen) anwendbar; bet duktilen Materialien (Stahl, Aluminium) soll des Stoßen mit der Werkzeugrotation verbunden sein, wobei die Rotationsgeschwindigkeit des Werkzeuges oder die Dauer seines Stoßes eine solche sein soll, daß während des Stoßes des Werkzeugs die Späneentfernung sichergestellt wird. Aber in der genannten Vorrichtung ist das nicht vorgesehen. Das Bild (die Vorlage) kann ein unterschiedliches Helligkeitsniveau und einen unterechiedlichen Härtegrad haben, während das bekannte Verfahren und die bekannte Vorrichtung es nicht gestatten, des Videosignal nach dem Schwarz- und dem Weißpegel zu normalisieren. Dabei soll die Vorrichtung mit der Amplitudenmodulation einen nichtlinearen Verstärkungsfaktor (Übertragungsfaktor) aufweisen, was in der besagten Vorrichtung nicht vorgesehen ist. Überdies gewährleisten die bekannten Verfahren und Vorrichtung keine Regelung der oberen und der unteren Schwelle des Amplitudenbereiches, weshalb sie die physikalisch-mechanischen Eigenschaften des Werkstückmaterials (beispielsweise Härte, Größe der Absplitterung beim Stoß, Grad der Weiße beim Stoß) nicht berücksichtigen können, weil verschiedene Eigenschaften verschiedene obere and untere Werte der Stoßamplituden erfordern. Außerdem bietet die kinematische Verbindung der lichtelektrischen Leseeinheit und des Werkzeuges keine Möglichkeit, eine Maßstabanpassung zwischen Vorlage und Werkstück durchzuführen and ihre Bewegungsgeschwindigkeiten unabhängig voneinander zu regeln, wodurch die Leistung der bekannten Vorrichtung herabgemindert wird.

Dadurch, daß in der bekannten Lösung nur die Amplitudenmodulation vorhanden ist, wird somit keine exakte Wiedergabe aller Abstufungen des Halbtonkeils gewährleistet. Därüber hinaus zwingt der Einsatz einer elektromechanischen Baugruppe bei fester Stoßfrequenz and -dauer dazu, eine nicht hohe Geschwindigkeit der Bildübertragung auf die Werkstückoberfläche, d.h. der Herstellung eines Erzeugnisses nach Muster, anzuwenden.

### Offenbarung der Erfindung

Der vorliegenden Erfindung liegt die Aufgabe zugrunde, ein Verfahren zur Herstellung von Erzeugnissen nach Muster mit solchen Arbeitsoperationen and eine Vorrichtung zur Durchführung dieses Verfahrens mit solchen Blockeinheiten zu schaffen, welche die Behandlung einer beliebigen Abstufung der optischen Dichte des Halbtonkeils der Vorlage-Kenndaten sicherstellen würden, welche bei hoher Geschwindigkeit ihrer Übertragung auf das Werkstück zur Herstellung einer Faksimile-Kopie vorgenommen wird.

Die gestellte Aufgabe ist durch Schaffung eines Verfahrens zur Herstellung von Erzeugnissen gelöst, welches darin besteht, daß eine Vorlage und ein Werkstück auf Untersätzen untergebracht werden, die Oberfläche der Vorlage durch eine elektrische Leseeinheit zeilenweise abgetastet wird, entsprechende verstärkte Signale gebildet werden, ihre Amplitudenmodulation erfolgt und nachfolgend die erhaltenen Signale in Bewegungen eines Werkzeuges in drei zueinander senkrechten Richtungen umgewandelt werden und das Werkzeug in die Werkstückoberfläche zur Herstellung eines Erzeugnisses, das eine Kopie der Vorlage ist, eindringt, erfindungsgemäß man die Bildung von verstärkten Signalen proportional zur optischen Dichte, die den Abstufungen der Halbtöne der VorlageKenndaten entspricht, bewerksteligt, die Amplitudenmodulation der Signale unter Bestimmung der oberen und der unteren Schwelle des Amplitudenbereiches, weiche der maximalen und der minimalen Abstufung der Halbtöne der Vorlage-Kenndaten entsprechen, vornimmt und vor der Durchführung der Amplitudenmodulation der Signale eine Umschaltung derselben zur Wahl einer Halbtonabstufung der Vorlage-Kenndaten und eine Frequenzmodulation zur Bestimmung der Ansprechfrequenz des Werkzeuges in der gewählten Abstufung zustande bringt.

Es ist zweckmäßig, vor der Durchführung der Frequenzmodulation der Signale deren Pulsbreitenmodulation zur Bildung von Signalen vorzunehmen, welche die Haltezeit des Werkzeuges bei dessen Eindringen in die Werkstückoberfläche regeln.

Es ist erwünscht, vor der Bestimmung der oberen und der unteren Schwelle des Amplitudenbereiches der Signale eine automatische Regelung ihres Verstärkungsfaktors zur Durchführung der Amplitudenmodulation unter Berücksichtigung der Trägheitskräfte des Werkzeuges urd der physikalisch-mechanischen Eigenschaften des Werkstückmaterials vorzunehmen.

Es ist günstig, die Abtastung der Oberfläche der Vorlage durch die elektrische Leseeinheit und die Bewegungen des Werkzeuges in drei zueinander senkrechten Richtungen mit Geschwindigkeiten vorzunehmen, deren Verhältnis entsprechend dem Maßstab der Vergrößerung oder Verkleinerung der Kopie gegenüber der Vorlage bestimmt wird.

Die Umschaltung der Signale, die Frequenzmodulation der Signale und die Pulsbreitenmodulation der Signale sind zweckmäßigerweise über Kanäle zu bewerkstelligen, deren Anzahl der Zahl von Abstufungen der Halbtöne der Vorlage-Kenndaten entspricht.

Als Werkzeug kann man ein beliebiges Werkzeug aus der Gruppe einsetzen: Fräser mit Drehantrieb, Elektrode aus einem Draht, der aus einem Material besteht, das farbige Halbtonbilder herzustellen erlaubt, Elektrode für Ultraschall- oder Elektrofunkenbearbeitung, Farbspritzapparat, Stoßmeißel.

Die gestellte Aufgabe ist auch durch Schaffung einer Vorrichtung zur Herstellung von Erzeugnissen nach Muster gelöst, enthaltend eine Leseeinheit für Vorlagenbild, deren Ausgang über einen Spannungsverstärker mit dem Steuereingang eines Amplitudenmodulators elektrisch verbunden ist, der mit seimem Ausgang an den Eingang eines Leistungsverstärkers gelegt ist, wobei an den anderen Eingang des Amplitudenmodulators ein Generator angeschlossen ist, während die Ausgänge des Leistungsverstärkers an die Eingänge einer elektromechanischen Baugruppe geführt sind, welche mit einem Werkzeug in Verbindung steht, das in drei zueinander senkrechten Richtungen bewegbar und in die Werkstückoberfläche zur Bildung eines Erzeugnisses eindringbar angeordnet ist, das eine Kopie der Vorlage darstellt, bei welcher Vorrichtung erfindungsgemäß der Amplitudenmodulator einen mit dem Eingang des Amplitudenmodulators elektrisch verbundenen Regler der oberen und der unteren Schwelle des Amplitudenbereiches enthält und die Vorrichtung durch einen Frequenzmodulator von Impulsen, die auf der elektromechanischen Baugruppe den Werkzeuges ankommen, und durch einen elektronischen mehrkanaligen Umachalter komplementiert ist, dessen Eingang an den entsprechenden Ausgang des Spannungsverstärkers angeschlossen ist und dessen Ausgänge an die jeweiligen Eingänge des Reglers der oberen und der unteren Schwelle des Amplitudenbereiches und des Frequenzmodulators geführt sind, dessen Ausgang an den Steuereingang des Generators gelegt ist.

Es ist zweckmäßig, daß die Vorrichtung einen Pulsbreitenmodulator enthält, vermittels dessen der Frequenzmodulator mit dem Umshalter verbunden ist und dessen Eingang an den entsprechenden Ausgang des Umschalters angeschlossen ist, während seine Ausgänge an die entsprechenden Eingänge des Frequenzmodulators gelegt sind.

Es ist erwünscht, daß die Vorrichtung einen Block der automatischen Regelung des Verstärkungsfaktors aufweist, vermittels dessen der Regler der oberen und der unteren Schwelle des Amplitudenbereiches mit dem Amplitudenmodulator elektrisch verbunden ist und dessen Eingang an den Eingang des genannten Reglers und dessen Ausgang an den Eingang des Amplitudenmodulators gelegt ist.

Es ist günstig, daß der Regler der oberen und der unteren Schwelle des Amplitudenbereiches aus einem Differential-Operationsverstärker mit die Bezugsspannung vorgebendem Potentiometer und aus einem Rechenverstärker besteht, der auf einem Operationsverstärker mit den Übertragungsfaktor vorgebendem Potentiometer und mit Rückführungswiderstand aufgebaut ist.

Es ist möglich, daß der Block der automatischen Regelung des Verstärkungsfaktors auf einem Operationsverstärker mit einer Rückkopplung aufgebaut ist, in deren Kreis ein Widerstand und eine Gruppe von umschaltenden Widerständen geschaltet sind, deren Anzahl der Zahl von Abstufungen der optischen Dichte der Vorlage-Halbtöne entspricht.

Es ist zweckmäßig, daß der Frequenzmodulator und der Pulsbreitenmodulator Kanäle aufweisen, deren Anzahl der Zahl von Abstufungen der optischen Dichte der Vorlage-Halbtöne entspricht, wobei jeder Kanal des Pulsbreitenmodulators aus einem Differential-Operationsverstärker besteht, der an einem seiner Eingänge mit den Frequenzmodulator kapazitiv rückgekoppelt ist, der andere Eingang des Differential-Operationsverstärkers an den entsprechenden Ausgang des Umschalters geführt ist, während ein jeder Kanal des Frequenzmodulators aus einem Hysteresekomparator besteht, dessen Eingang an den Ausgang des Pulsbreitenmodulators gelegt ist, der Ausgang aber in den Kreis der Gesamtrückkopplung geschaltet ist.

Es ist erwünscht, daß der elektronische Mehrkanal-Umschalter Kanäle enthält, deren Anzahl der Zahl der Abstufungen der optischen Dichte der Vorlage-Halbtöne entspricht, wobei jeder Kanal einen einstellbaren Schwellenwertkomparator und eine Gruppe von transistorisierten Emitterfolgern aufweist.

Es ist günstig, daß die Leseeinheit für das Vorlagenbild eine lichtelektrische Leseeinheit darstellt, die unabhängig von der Bewegung der elektromechanischen Baugruppe mit dem Werkzeug bewegbar angeordnet ist.

Es ist möglich, daß die lichtelektrische Leseeinheit und die elektromechanische Baugruppe mit den Werkzeug mit individuellen Servoantrieben versehen sind.

Es ist zweckmäßig, daß die lichtelektrische Leseeinheit und die elektromechanische Baugruppe mit dem Werkzeug mit Geschwindigkeiten bewegbar angeordnet sind, deren Verhältnis den Maßstab der Vergrößerung oder Verkleinerung der Kopie gegenüber der Vorlage bestimmt.

Dabei ist es möglich, daß das Werkzeug entweder einen Fräser mit Drehantrieb oder eine Elektrode aus einem Draht, der aus einem Material besteht, das farbige Halbtonbilder herzustellen gestattet, oder eine Elektrode für Ultraschall- oder Elektrofunkenbearbeitung oder einen Farbspritzapparat oder einen Stoßmeißel darstellt.

Durch den Einsatz des Frequenzmodulators bei Vorhandensein des Amplitudenmodulators wird bei der Bildübertragung von der Vorlage auf die zu bearbeitende Werkstückoberfläche ein stetiger Übergang und die Behandlung jeder beliebigen der fünfzehn Abstufungen des Halbtonkeils gewährleistet und bei Vorhandensein einer größeren oder kleineren Zahl der Abstufungen wird die Behandlung jeder von den vorhandenen Abstufungen sichergestellt.

Der Regler der oberen und der unteren Schwelle des Amplitudenbereiches gestattet es, die Vorrichtung auf das Niveau der schwarzen (Fehlen eines Signals) und das Niveau der weißen (maximales Signal) Charakteristik der Vorlage einzustellen.

Das Vorhandensein des elektronischen Umschalters bietet die Möglichkeit, eine Abstufung des Halbtons der Vorlage-Kennwerte zu wählen, während die Kombination desselben mit dem Frequenzmodulator es möglich macht, die Ansprechfrequenz des Werkzeuges in der gewählten Abstufung zu bestimmen.

Der Pulsbreitenmodulator gewährleistet eine Regelung der Haltezeit des in die Werkstückoberfläche eingedrungenen Werkzeuges, was beim Fräsen der zu bearbeitenden Oberfläche erforderlich sein kann.

Das Vorhandensein des genannten Blocks der automatischen Regelung des Verstärkungsfaktors erlaubt es, eine Zu- oder Abnahme der bei der Frequenzmodulation entstehenden Trägheitskräfte des Werkzeuges auszugleichen. Außerdem ermöglicht dieser Block, den Änderungsgrad der Stoßamplitude des Werkzeuges für verschiedene physikalisch-mechanische Eigenschaften des Werkstückmaterials zu berücksichtigen.

Dadurch, daß der Frequenzmodulator, der elektronische Umschalter, der Block der automatischen Regelung des Verstärkungsfaktors und der Pulsbreitenmodulator vorhanden sind, wird es möglich, die oberen und die unteren Schwellenwerte des Frequenzbereiches für verschiedene physikalisch-mechanisehe Eigenschaften des Werkstückmaterials vorzugeben.

Die Verwendung der unabhängigen Einzelantriebe für die Leseeinheit und die elektromechanische Baugruppe bietet die Möglichkeit, die erforderliche getrennte Ablesediskretheit und die Kopierung nach Vollbild und Zeile vorzugeben. Ihre Bewegung mit verschiedenen Geschwindigkeiten ermöglicht außerdem eine Maßstabanpassung der Bildkopie, ohne daß die Abmessungen der Vorlage geändert werden, und erlaubt es, optimale Abtast- und Kopiergeschwindigkeiten zu wählen und dabei die Bearbeitungsleistung zu steigern.

Die elektromechanische Baugruppe gewährleistet bei Verwendung einer Rückstellspule einen exakt ausgeprägten Rücklauf bei hin- und hergehender Bewegung, was beim Stoßen notwendig ist. Durch die Drehungsmöglichkeit des Ankers der elektromechanischen Baugruppe wird die Werkzeugrotation sichergestellt, was beim Fräsen erforderlich ist. Auf diese Weise wird die Vereinigung des Stoßens mit dem Fräsen der Werkstückoberfläche gewährleistet.

Der Einsatz eines Fräsers mit Drehantrieb gestattet es, Halbtonkopien von Bildern anF duktilen Materialien zu erhalten. Mit Hilfe von Elektroden, die aus Draht verschiedener Buntmetalle bestehen, können farbige Halbtonerzeugnisse aufgrund von Vorlagen hergestellt werden. Bei Verwendung von Elektroden für Ultraschall- oder Elektrofunkenbearbeitung kann man Halbtonkopien auf harten Materialien erhalten. Mit Hilfe eines Stoßmeißels bildet man Kopien auf der Oberfläche von Erzeugnissen aus Stein, Holz, Graphit. Ein Farbspritzapparat gibt die Möglichkeit, Farbkopien von Gemälden zu erhalten. Beim Einsatz der aufgezählten Werkzeuge können flache, zylindrische, sphärische und andere Erzeugnisse nach Muster hargestellt werden.

Somit gewährleistet die Anwendung des erfindungsgemäßen Verfahrens und der erfindungsgemäßen Vorrichtung die Behandlung einer beliebigen Abstufung der optischen Dichte des Halbtonkeils der Vorlage-Kenndaten, weiche Behandlung bei hoher Geschwindigkeit ihrer Übertragung auf des Werkstück zur Herstellung einer Faksimile-Kopie durchgeführt wird.

### Beste Ausführungsform der Erfindung

Zum besseren Verständnis der Erfindung werden nachstehend konkrete Ausführungsbeispiele derselben unter Bezugnahmen auf beigefügte Zeichnungen angeführt, in denen es zeigt:
Fig. 1 ein Beispiel für die Realisierung des Verfahrens und die konstruktive Ausführung der Vorrichtung zur Herstellung von Erzeugnissen nach Muster mit einer Leseeinheit und einer elektromechanischen Baugruppe, die kinematisch verbunden sind, gemäß der Erfindung;
Fig. 2 elektrische Prinzipschaltung der Vorrichtung, gemäß der Erfindung;
Fig. 3 elektrische Prinzipschaltung des elektronischen Umachaltars, gemäß der Erfindung;
Fig. 4 ein Beispiel der konstruktiven Ausführung der elektromechanischen Baugruppe, gemäß der Erfindung;
Fig. 5 elektrische Prinzipschaltung eines der Kanäle des elektronischen Umschalters und Zeitdiagramm der Vorgabe seines Arbeitsbereichs, gemäß der Erfindung;
Fig. 6 ein Beispiel der stückweislinearen Approximation des Verstärkungsfaktors für den Block der automatisehen Regelung des Verstärkungsfaktors, gemäß der Erfindung;
Fig. 7 elektrische Prinzipschaltung eines der Kanäle des Pulsbreitenmodulators und an seinem Ausgang formierte Rechteckimpulse, gemäß der Erfindung;
Fig. 8 ein Ausführungsbeispiel der Vorrichtung, bei der die Leseeinheit und die elektromechanische Baugruppe mit individuellen Servoantrieben versehen sind, gemäß der Erfindung.

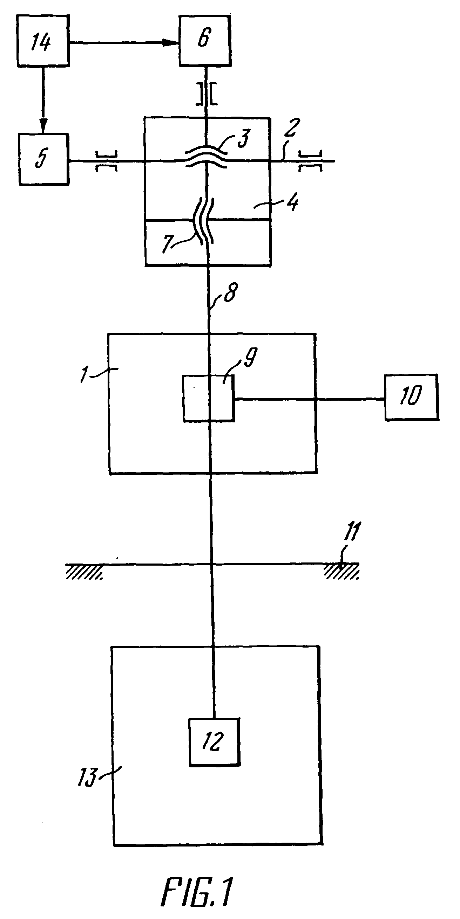

Die Vorrichtung zur Herstellung von Erzeugnissen nach Muster enthält einen Untersatz 1 (Fig. 1) zur Unterbringung eines Werkstücks, der eine Führung 2 mit einem Antrieb 3 für einen Wagen 4 sowie einen Elektromotor 5 besitzt. An dem Wagen 4 ist ein Elektromotor 6 mit einem Antrieb 7 für einen Lenker 8 installiert. Am Lenker 8 ist eine elektromechanische Baugruppe 9 und ein Elektromotor 10 montiert. Der Lenker 8 lagert auf einer Abstützung 11 und weist eine Leseeinheit 12 auf. Ein Untersatz 13 dient zur Unterbringung eines Vorlage-Musters (in diesem Fall einer Zeichnung). Die Elektromotoren 5 und 6 stehen mit einem Rastergeber 14 in Verbindung.

Die Leseeinheit 12 kann beispielsweise als weitbekannter Lichtkopf auf Basis eines Fotoverstärkers oder als weitbekannte Videokamera ausgebildet sein ("Sovetsky entsiklopedichesky slovar" /Sowjetisches Lexikon/, Verlag "Sovetskaya entsiklopedia" (Moskau), SS. 218, 531, 1421, aus dem Jahre 1985).

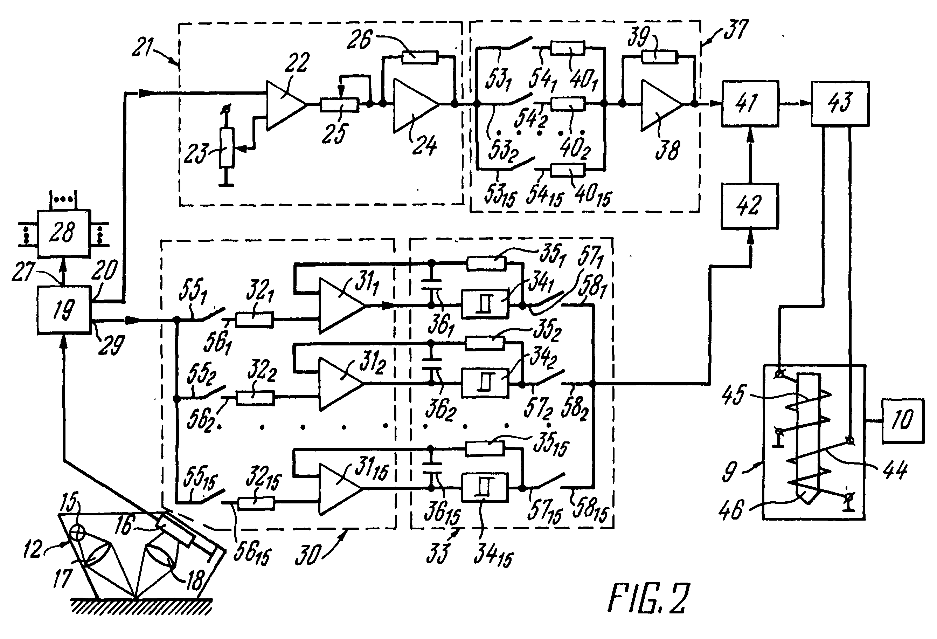

Im ersten Fall enthält die lichtelektrische Lesseinheit 12 eine Lichtquelle 15 (Fig. 2), einen Fotoempfänger 16, Fokussierlinsen 17, 18. Der Ausgang des Fotoempfängers 16 ist an einen Spannungsverstärker 19 angeschlossen, dessen Ausgang 20 an den Eingang eines Zweistufenreglers 21 der oberen und der unteren Schwelle des Amplitudenbereiches eines Signals geführt ist. Der Regler 21 besteht aus einem Differential-Operationsverstärker 22 mit die Bezugsspannung vorgebendem Potentiometer 23 und aus einem Rechenverstärker, der auf einem Operationsverstärker 24 mit einem Potentiometer 25, welcher zur Vorgabe eines Übertragungsfaktors dient, and mit einem Rückführungswiderstand 26 aufgebaut ist. Außerdem ist ein Ausgang 27 des Spannungsverstärkers 19 an den Eingang eines elektronischen Umschalters 28 angeschlossen, der fünfzehn Kanäle besitzt.

Ein Ausgang 29 des Spannungaverstärkers 19 ist an den Eingang eines Pulsbreitenmodulators 30 gelegt, der fünfzehn identische Kanäle aufweist, weiche Signale formieren, die den fünfzehn Abstufungen der optischen Dichte des Halbtonkeils der Vorlage-Kenndaten entsprechen. Jeder von diesen Kanälen besteht aus einem Differential-Operationsverstärker 31₁... bzw. 31₁₅, der an seinem einen Eingang rückgekoppelt ist. Sein anderer Eingang ist an eine der Herausführungen eines Widerstandes 32₁... bzw. 32₁₅ angeschlossen, dessen andere Herausführung an den entsprechenden Ausgang des elektronischen Umschalters 28 geführt ist.

Die Ausgänge des Pulsbreitenmodulators 30 sind an die entsprechenden Eingänge eines Mehrkanal-Frequenzmodulators 33 angeschlossen, der auf Hysteresekomparatoren 34₁ ... 34₁₅ aufgebaut ist, welche von einer Gesamtrückkopplung mit den Operationsverstärkern 31₁ ...31₁₅ des Pulsbreitenmodulators 30 über Widerstände 35₁ ...35₁₅ und Kondensatoren 36₁ ...36₁₅ erfaßt sind. Die Ausgänge des Komparators 34₁ ...34₁₅, die die Ausgänge der Kanäle des Frequenzmodulators 33 darstellen, sind an die entsprechenden Eingänge des elektronischen Umschaltors 28 geführt.

Die Vorrichtung enthält auch einen mehrkanaligen (mit einer Anzahl von Kanälen, die den Abstufungen der optischen Dichte des Halbtonkeils der Vorlage-Kenndaten entspricht) Block 37 der automatischen Regelung des Verstärkungsfaktors, welcher auf einem Operationsverstärker 38 mit einer Rückkopplung aufgebaut ist, in deren Kreis ein Widerstand 39 und eine Gruppe von umschaltenden Widerständen 40₁ ...40₁₅ geschaltet sind, die an die entsprechenden Ausgänge des elektronischen Umschalters 28 angeschlossen sind. Der Ausgang des Operationsverstärkers 38 ist an einen der Eingänge eines Amplitudenmodulators 41 geführt, dessen anderer Eingang an den Ausgang eines Generators 42 angeschlossen ist. Der Ausgang des Amplitudenmodulators 41 ist an den Eingang eines Leistungsvorstärkers 43 gelegt, dessen Ausgänge jeweils mit den Herausführungen der Spulen 44 und 45 der elektromechanischen Baugruppe 9 verbunden sind, welche für die hin- und hergehende Bewegung eines Werkzeuges 46 sorgen.

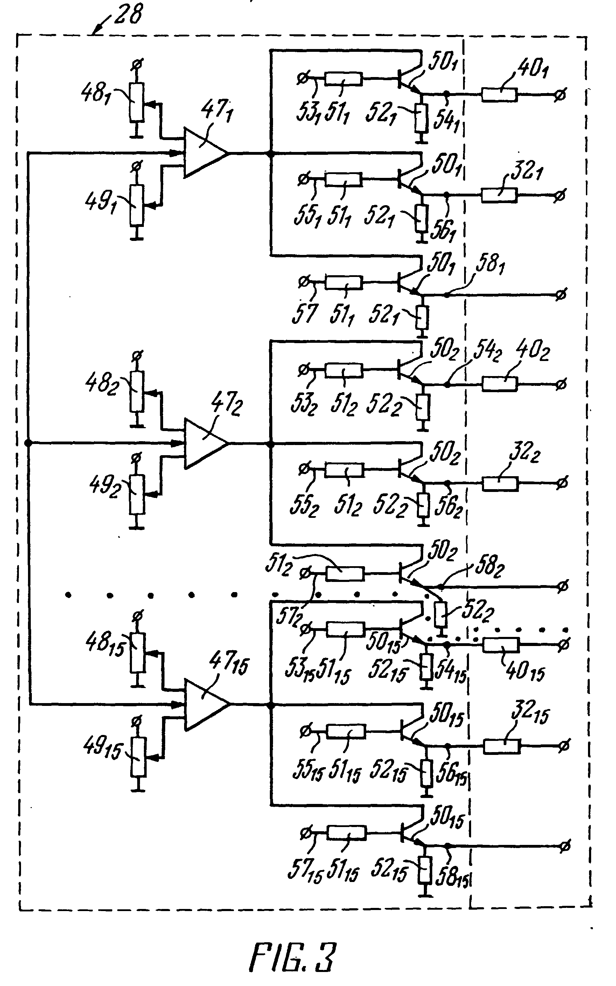

Der elektronische Umschalter 28 (Fig. 3) enthält fünfzehn Kanäle (gemäß der Zahl der Abstufungen des Halbtonkeils). Jeder Kanal weist einen Schwellenwertkomparator 47₁ ... bzw. 47₁₅ auf, an dessen Eingänge Einstellpotentiometer 48₁ ... bzw. 48₁₅ und 49₁ ... bzw. 49₁₅ der oberen und der unteren Ansprechschwelle des Komparators 47₁ ... bzw. 47₁₅ angeschlossen sind. Der Ausgang jedes Komparators 47₁ ... bzw. 47₁₅ ist an die Kollektoren von Emitterfolgern geführt, die auf drei Transistoren 50₁ ...50₁₅ und zwei Widerständen 51₁ ...51₁₅ und 52₁ ...52₁₅ aufgebaut sind. Den Eingang des elektronischen Umschalters 28 bilden die zusammengeschalteten Eingänge der Komparatoren 47₁ ...47₁₅. Die Punkte 53₁ ...53₁₅ sind zusammengeschaltet und an den Ausgang des Regelers 21 angeschlossen, Punkte 54₁ ...54₁₅ sind an die Herausführungen der Widerstände 40₁ ...40₁₅ angeschlossen, Punkte 55₁ ...55₁₅ sind zusammengeschaltet und an den Ausgang 29 des Spannungsverstärkers 19 angeschlossen, Punkte 56₁ ...56₁₅ sind an die Herausführungen der Widerstände 32₁ ...32₁₅ angeschlossen, Punkte 57₁ ...57₁₅ sind an die Ausgänge der Hysteresekomparatoren 34₁ ...34₁₅ angeschlossen und Punkte 58₁ ...58₁₅ sind zusammengeschaltet und an den Eingang des Generators 42 angeschlossen.

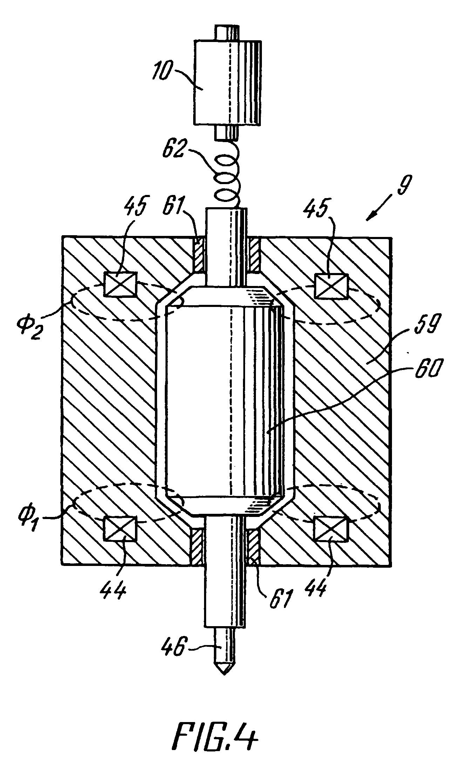

Die elektromechanische Baugruppe 9 (Fig. 4) enthält ein Gehäuse 59, in dem die Spulen 44 und 45 untergebracht sind, welche einen Anker 60 umfassen, der mit dem Werkzeug 46 verbunden und in Führungsbuchsen 61 angeordnet ist. Außerdem ist der Anker 60 mit dem Elektromotor 10 für die Rotation des Werkzeuges 46 über eine Federaufhüngung 62 verbunden.

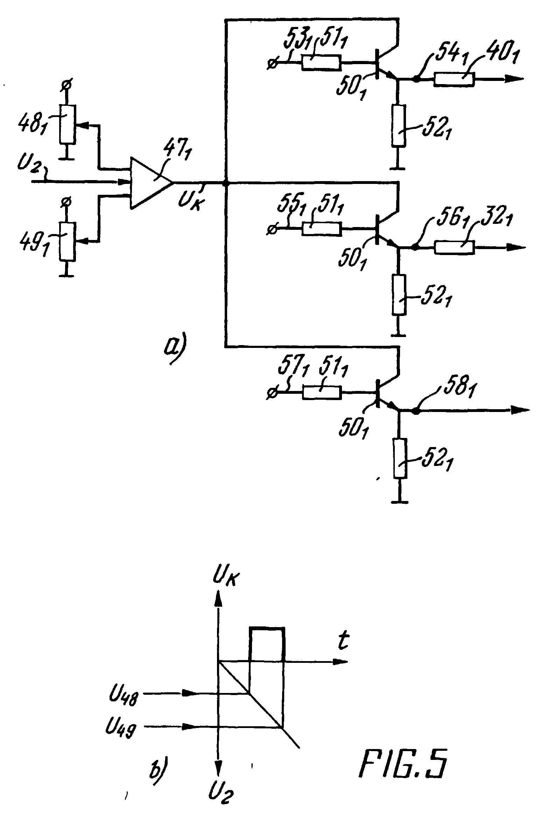

In Fig. 5 ist das Zeitdiagramm für die Vorgabe des Arbeitsbereiches eines der Kanäle des elektronischen Umschalters 28 (Fig. 3) dargestellt, worin sind: U₂ - Videosignal am Eingang des elektronischen Umschalters 28, Uₖ - Signal am Ausgang des Komparators 47₁,U₄₈ und U₄₉ - Spannungen, die den Grenzen einer der fünfzehn Abstufungen des Halbtonkeils entsprechen.

In Fig. 6 ist die stückweislineare Approximation des Verstärkungsfaktors gezeigt, worin U₂₁ und U₃₇ jeweils das Eingangs- und das Ausgangssignal des Blocks 37 (Fig. 2) der automatischen Regelung des Verstärkungsfaktors sind.

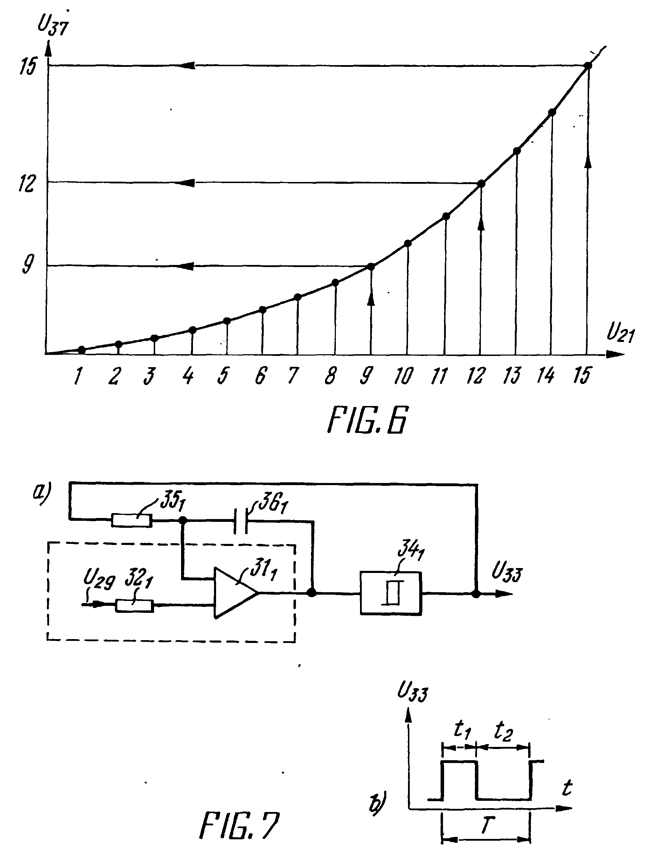

Fig. 7 veranschaulicht Rechteckimpulse, die am Ausgang der hintereinandergeschalteten Kanäle des Pulsbreiten- und des Frequenzmodulators 30 bzw. 33 formiert werden, worin bedeuten: T - Impulsfolgeperiode, t₁ - Dauer positiver Impulse, t₂ - Pausezeit.

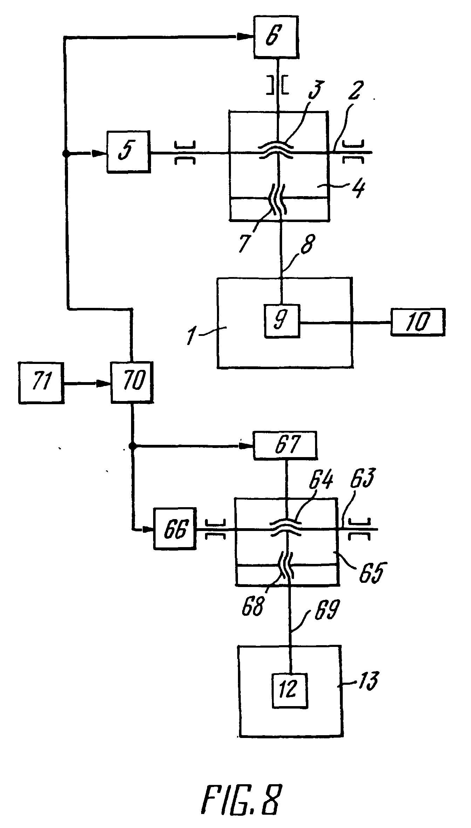

In Fig. 8 ist ein Beispiel der konstruktiven Ausführung der Vorrichtung gezeigt, bei der die Lesesinheit 12 und die elektromechanische Baugruppe 9 unabhängig voneinandor bewegbar sind. In diesem Fall sind auf dem Untersatz 13 zur Unterbringung eines Zeichnungsmusters der Vorlage eine Führung 63 mit dem Antrieb 64 eines Wagens 65 und eine Elektromotor 66 installiert. Auf dem Wagen 65 ist ein Elektromotor 67 mit den Antrieb 68 eines Lenkers 69 montiert, an welchem die Lese. einheit 12 angebracht ist. Als Elektromotoren 5, 6, 66 und 67 werden Servoantriebe verwendet, deren Arbeit mit Hilfe eines Blocks 70 zur Vorgabe der Ablesediskretheit und der Maßstabwahl synchronisiert wird. Die Steuerung des Blocks 70 erfolgt von einem Pult 71 aus.

Die erfindungsgemäßen Verfahren und Vorrichtung zur Herstellung von Erzeugnissen nach Muster funktionieren folgendermaßen.

Auf dem Untersatz 1 wird ein Werkstück und auf dem Untersatz 13 eine Vorlage (ein Muster), z.B. eine Zeichnung (ein Foto), untergebracht. Der Lenker 8 lagert auf der Abstützung 11. Beim Einschalten der Elektromotoren 5, 6 wird eine zeilenweise Abtastung der Oberfläche der Zeichnung durch die Einheit 12 und entsprechend der Werkstückoberfläche durch die elektromechanische Baugruppe 9 mit Werkzeug 46 sichergestellt. Der Elektromotor 5 besorgt eine Zeilenablenkung, während der Elektromotor 6 für eine Bildablenkung sorgt. Das Verhältnis der Geschwindigkeiten der Zeilen- und der Bildablenkung wird vom Rastergeber 14 gewährleistet. Gleichzeitig mit der Abtastung der zu bearbeitenden Werkstückoberfläche durch das Werkzeug 46 wird das von der Quelle 15 auf die Oberfläche der Zeichnung gerichtete Licht von dieser Oberfläche reflektiert und gelangt auf den Fotoempfänger 16. Infolgedessen sind Signale, welche an den Ausgängen 20, 27, 29 des Verstärkers 19 erzeugt werden, der optischen Dichte der Zeichnung proportional. Dabei ist in Betracht zu ziehen, daß die optische Dichte der Lichtstrahlung in diesem Fall durch fünfzehn Abstufungen des Halbtonkeils erfaßt wird (in einem anderen Fall kann die Zahl dieser Abstufungen größer oder kleiner sein). Diese Abstufungen werden durch Spannangen bestimmt, die der Beleuchtungsstärke des vom Bild reflektierten Signals an den Ausgängen 20, 27, 29 des Spannungsverstärkers 19 proportional sind. Eines dieser Signale gelangt an den Eingang des elektronischen Umschalters 28, der mit seinen Komparatoren 47₁ ...47₁₅ eine Halbtonabstufung wählt. Dies drückt sich darin aus, daß der Umschalter 28 den entsprechenden Kanal des Blocks 37 zur Regelung des Verstärkungsfaktors, den entsprechenden Kanal des Pulsbreitenmodulators 30 und den entsprechenden Kanal des Frequenzmodulators 33 einschaltet.

In Fig. 5 ist ein Beispiel für die Vorgabe des Arbeitsbereiches eines der Kanäle des Umschalters 28 angeführt. Dabei wird die erste Schwelle durch das Potentiometer 48₁ und die zweite Schwelle durch das Potentiometer 49₁ vorgegeben. Während das Videosignal U₂ sich in den Grenzen des genannten Bereiches der Schwellen (U₄₈; U₄₉) befindet und das Potential (Uₖ) am Ausgang 47₁ gleich eins ist, werden die Transistoren 50₁ geöffnet und die Widerstände 51₁ angeschlossen, und die Signals von den Punkten 53₁, 55₁ und 57₁ gelangen zu den Punkten 54₁ 56₁ und 58₁. Ähnlich arbeiten die übrigen vierzehn Kanäle des elektronischen Umschalters 28.

In Fig. 6 ist die lineare Approximation des Verstärkungsfaktors des Blocks 37 gezeigt, welche bei aufeinanderfolgendem Einschalten - Abschalton der Widerstände 40₁ ...40₁₅ erfolgt. Eine solche Änderung des Verstärkungsfaktors, die durch den Block 37 für den Amplitudenmodulator 41 realisiert wird, ist zum Ausgleich von Trägheitskräften des Werkzeuges 46 erforderlich, welche bei der vom Block 33 besorgten Frequenzmodulation entstehen. Außerdem kann eine solche nichtlineare Änderung des Verstärkungsfaktors zur Berücksichtigung der physikalisch-mechanischen Eigenschaften des Materials der zu bearbeitenden Werkstückoberfläche erforderlich werden. Gleichzeitig gelangt ein Videosignal vom Ausgang 20 des Verstärkers 19 an den Eingang des Reglers 21 der oberen und der unteren Signalquelle. Dieser Regler 21 ist auf dem Differential-Operationsverstärker 22 aufgebaut, an dessen einen Eingang das Videosignal U₂ und an dessen anderen Eingang die Vorspannung vom Potentiometer 23 gelangt, mittels dessen man das Nullpotential einstellt, wenn sich der Lichtstrahl auf der dunkelsten Stelle des Bildes befindet. Die zweite Stufe des Reglers 21 besteht aus dem Operationsverstärker 24 mit Rückkopplung. Der Übertragungsfaktor der zweiten Stufe wird mittels des Potentiometers 25 eingestellt. Mit diesem Potentiometer 25 stellt man das maximale Potential ein, wenn sich der Lichtstrahl auf der hellsten Stelle des Bildes befindet. Somit gestattet der Regler 21 es, die Vorrichtung auf das Bild unterschiedlicher optischer Dichte einzustimmen.

Weiterhin gelangt das im Regler 21 normierte Signal an den Eingang des Blocks 37 und passiert einen seiner Kanäle. Dieser Block 37 ist auf dem rückgekoppelten Operationsverstärker 38 aufgebaut. Die Eingangskreise des Verstärkers 38 bestehen aus den Widerständen 40₁ ...40₁₅, die durch den elektronischen Umschalter 28 umgeschaltet werden. Nachdem das Signal einen der Kreise passiert hat, gelangt es nach nichtlinearer Verstärkung an einen der Eingänge des Amplitudenmodulators 41.

Außerdem ist der Ausgang 29 des Verstärkers 19 an den Eingang des Pulsbreitenmodulators 30 gelegt, dessen Kanäle ebenfalls durch den elektronischen Umschalter 28 umgeschaltet werden. Die Wahl jedes Kanals hängt von dem Pegel des Videosignals am Ausgang 27 des Verstärkers 19 oder am Eingang des Umschalters 28 ab.

Es wird nun die Arbeit eines der Kanäle behandelt, der auf dem kapazitiv rückgekoppelten Operationsverstärker 31₁ aufgebaut ist; welcher einen Integrator darstellt, dessen Ansgang an den Eingang des Hysteresekomparators 34₁ angeschlossen ist. Die beiden Stufen sind rückgekoppelt, wobei am Ausgang des Kanals Rechteckimpulse U₃₃ formiert werden, deren Impulsfolgeperiode T durch die Parameter des Widerstandes 35₁ und des Kondensators 36₁ und deren Impulsdauer t₁ und t₂ durch die Ausgangsspannung U₂₉ des Verstärkers 19 bestimmt werden.

In der Vorrichtung gewährleistet des RC-Verhältnis in jedem Kanal des Frequenzmodulators 33 einen Frequenzbereich von 10...80 Hz, der Kanal wird vom Umschalter 28 gewählt, während die Impulsbreite durch den Pegel des Signals U₂₉ am Ausgang des Verstärkers 19 bestimmt wird. Von dem Ausgang des Frequenzmodulators 33 gelangen die Impulse an den Eingang des Generators 42. In diesem Block werden die Impulsvorder- und die Impulshinterflanke und die Impulsdächer formiert, es wird (notwendigenfalls) der negative Teil der Impulse weggenommen und die Impulse werden verstärkt. Des weiteren gelangen diese Impulse an den zweiten Eingang des Amplitudenmodulators 41. Die modulierten Impulse werden dem Eingang des Leistungsverstärkers 43 zugeführt und gelangen dann an den Eingang der elektromechanischen Baugruppe 9 auf die Wicklung der Spule 44. Vom zweiten Ausgang des Verstärkers 43 gelangen die Impulse, deren Dauer zur Pause t₂ proportional ist, auf die Wicklung der Rückstellspule 45. Dabei erzeugt die Spule 44 einen magnetischen Fluß Φ₁, der die Abwärtsbewegung des Ankers 60 gewährleistet, während die Spule 45 einen magnetischen Fluß Φ₂ erzeugt, welcher die Aufwärtsbewegung des Ankers 60 sicherstellt; auf diese Weise vollführt das Werkzeug 46 schwingende Hin- und Herbewegungen.

Beim Einschalten des Elektromotors 10 wird die Rotation des Ankers 60 und des Werkzeuges 46 über die Feder 62 herbeigeführt, die außerdem dem Anker 60 die Ausgangsstelltung vorgibt. Hierbei gewährleistet die Amplituden-Frequenzmodulation die Kraft und Häufigkeit der Stöße des Werkzeuges 46 gegen das Werkstück, während die Impulsbreitenmodulation die Haltezeit des in die Werketückoberfläche eingedrungenen Werkzeuges 46 sicherstellt.

Die individuellen Elektromotoren 5, 6, 66 und 67 der elektromechanischen Baugruppe 9 und der Leseeinheit 12 bieten die Möglichkeit, eine Diskretheit der Ablesung und Kopierung nach Vollbild und Zeile vorzugeben. Durch das Verhältnis der Zahl von auf die Elektromotoren 5, 6, 66, 67 gelangenden Impulsen, welches durch den Block 70 vorgegeben wird, wird eine Maßstabanpassung ermöglicht, wobei die Vorgabe dieser Parameter vom Pult 71 aus erfolgt.

Beispielsweise wird bei einer Diskretheit des Schrittes der Elektromotoren 5 und 6 gleich 0,15 mm und der Elektromotoren 66 und 67 gleich 0,3 mm das Bild um das Zweifache verkleinert. Bei Werten der Diskretheit des Schrittes der Elektromotoren 5 und 6 gleich 1,5 mm und der Elektromotoren 66 und 67 gleich 0,15 mm wird des Bild um das Zehnfache vergrössert.

## Patentansprüche

1. Verfahren zur Hersteltung von Erzeugnissen, das darin besteht, daß eine Vorlage und ein Werkstück auf Untersätzen untergebracht werden, die Oberfläche der Vorlage durch eine elektrische Leseeinheit zeilenweise abgetastet wird, entsprechende verstärkte Signale gebildet werden, ihre Amplitudenmodulation erfolgt und nachfolgend die erhaltenen Signale in Bewegungen eines Werkzeuges in drei zueinander senkrechten Richtungen umgewandelt werden und das Werkzeug in die Werkstückoberfläche zur Herstellung eines Erzeugnisses, das eine Kopie der Vorlage ist, eindringt, dadurch **gekennzeichnet**, daß man die Bildung von verstärkten Signalen proportional zur optischen Dichte, die den Abstufungen der Halbtöne der Vorlage-Kenndaten entspricht, bewerkstelligt, die Amplitudenmodulation der Signale unter Bestimmung der oberen und der unteren Schwelle des Amplitudenbereiches, welche der maximalen und der minimalen Abstufung der Halbtöne der Vorlage-Kenndaten entsprechen, vornimmt und vor der Durchführung der Amplitudenmodulation der Signale eine Umschaltung derselben zur Wahl einer Halbtonabstufung der Vorlage-Kenndaten und eine Frequenzmodulation zur Bestimmung der Ansprechfrequenz des Werkzeuges in der gewählten Abstufung zustande bringt.

2. Verfahren nach Anspruch 1, dadurch **gekennzeichnet**, daß man vor der Durchführung der Frequenzmodulation der Signale deren Pulsbreitenmodulation zur Bildung von Signalen vornimmt, welche die Haltezeit des Werkzeuges bei dessen Eindringen in die Werkstückoberfläche regeln.

3. Verfahren nach Anspruch 1, dadurch **gekennzeichnet**, daß man von der Bestimmung der oberen und der unteren Schwelle des Amplitudenbereiches der Signale eine automatische Regelung ihres Verstärkungsfaktors zur Durchführung der Amplitudenmodulation unter Berücksichtigung der Trägheitskräfte des Werkzeuges und der physikalisch-mechanischen Eigenschaften des Werkstückmaterials vornimmt.

4. Verfahren nach Anspruch 1, dadurch **gekannzeichnet**, daß man die Abtastung der Oberfläche der Vorlage durch die elektrische Leseeinheit und die Bewegungen des Werkzeuges in drei zueinander senkrechten Richtungen mit Geschwindigkeiten vornimmt, deren Verhältnis entsprechend dem Maßstab der Vergrößerung oder Verkleinerung der Kopie gegenüber der Vorlage bestimmt wird.

5. Verfahren nach Anspruch 1, dadurch **gekennzeichnet**, daß man die Umschaltung der Signale über Kanäle vornimmt, deren Anzahl der Zahl von Abstufungen der Halbtöne der Vorlage-Kenndaten entspricht.

6. Verfahren nach Anspruch 1, dadurch **gekennzeichnet**, daß man die Frequenzmodulation der Signale über Kanäle vornimmt, deren Anzahl der Zahl von Abstufungen der Halbtöne der Vorlage-Kenndaten entspricht.

7. Verfahren nach Anspruch 2, dadurch **gekennzeichnet**, daß man die Pulsbreitenmodulation der Signale über Kanäle vornimmt, deren Anzahl der Zahl von Abstufungen der Halbtöne der Vorlage-Konndaten entspricht.

8. Verfahren nach Anspruch 1, dadurch **gekennzeichnet**, daß man als Werkzeug ein beliebiges Werkzeug einsetzt, gewählt aus der Gruppe: Fräser mit Drehantrieb, Elektrode aus Draht, der aus einem Material besteht, welches farbige Halbtonbilder herzustellen erlaubt, Elektrode für Ultraschall- oder Elektrofunkenbearbeitung, Farbspritzapparat, Stoßmeißel.

9. Vorrichtung zur Herstellung von Erzeugnissen, enthaltend eine Leseeinheit für Vorlagenbild, deren Ausgang über einen Spannungsverstärker mit dem Steuereingang eines Amplitudenmodulators elektrisch verbunden ist, der mit seinem Ausgang an den Eingang eines Leistungsverstärkers gelegt ist, wobei an den anderen Eingang des Amplitudenmodulators ein Generator angeschlossen ist, während die Ausgänge des Leistungaverstärkers an die Eingänge einer elektromechanischen Baugruppe geführt sind, welche mit einem Werkzeug in Verbindung steht, daß in drei zueinander senkrechten Richtungen bewegbar und in die Werkstückoberfläche zur Bildung einer Kopie der Vorlage eindringbar angeordnet ist, dadurch **gekennzeichnet**, daß der Amplitudenmodulator einen mit dem Eingang des Amplitudenmodulators elektrisch verbundenen Regler der oberen und der unteren Schwelle des Amlitudenbereiches enthält und die Vorrichtung durch einen Frequenzmodulator von Impulsen, die auf der elektromechanischen Baugruppe des Werkzeuges ankommen, und durch einen elektronischen mehrkanaligen Umschalter komplementiert ist, dessen Eingang an den entsprechenden Ausgang des Spannungsverstärkers angeschlossen ist und dessen Ausgänge an die jeweiligen Eingänge des Reglers der oberen und der unteren Schwelle des Amplitudenbereiches und des Frequenzmodulators geführt sind, dessen Ausgang an den Steuereingang des Generators gelegt ist.

10. Vorrichtung nach Anspruch 9, dadurch **gekennzeichnet**, daß sie einen Pulsbreitenmodulator enthält, vermittels dessen der Frequenzmodulator mit dem Umachalter verbunden ist und dessen Eingang an den enteprechenden Ausgang des Umschalters angeschlossen ist, während seine Ausgänge an die entsprechenden Eingänge des Frequenzmodulators gelegt sind.

11. Vorrichtung nach Anspruch 9, dadurch **gekennzeichnet**, daß sie einen Block der automatischen Regelung des Verstärkungsfaktors aufweist, vermittels dessen der Regler der oberen und der unteren Schwelle des Amplitudenbereiches mit dem Amplitudenmodulator elektrisch verbunden ist und dessen Eingang an den Eingang des genannten Reglers und dessen Ausgang an den Eingang des Amplitudenmodulators gelegt ist.

12. Vorrichtung nach Ansprüchen 9, 11, dadurch **gekennzeichnet**, daß der Regler der oberen und der unteren Schwelle des Amplitudenbereiches aus einem Differential-Operationsverstärker mit die Bezugespannung vorgebendem Potentiometer und aus einem Rechenverstärker besteht, der auf einem Operationsverstärker mit den Übertragungsfaktor vorgebendem Potentiometer und mit Rückführungswiderstand aufgebaut ist.

13. Vorrichtung nach Anspruch 11, dadurch **gekennzeichnet**, daß der Block der automatischen Regelung des Verstärkungsfaktors auf einem Operationsverstärker mit einer Rückkopplung aufgebaut ist, in deren Kreis ein Widerstand und eine Gruppe von umschaltenden Widerständen geschaltet sind, deren Anzahl der Zahl von Abstufungen der optischen Dichte der Vorlage-Halbtöne entspricht.

14. Vorrichtung nach Ansprüchen 9, 10, dadurch **gekennzeichnet**, daß der Frequenzmodulator und der Pulabreitenmodulator Kanäle autweisen, deren Anzahl der Zahl von Abstufungen der optischen Dichte der Vorlage-Halbtöne entspricht, wobei jeder Kanal des Pulsbreitenmodulators aus einem Differential-Operationsverstärker besteht, der an einem seiner Eingänge kapazitiv rückgekoppelt ist, der andere Eingang des Differential-Operationsverstärkers an den entsprechenden Ausgang des Spannungsverstärkers (des Umschalters) geführt ist, während jeder Kanal des Frequenzmodulators aus einem Hysteresekomparator besteht, dessen Eingang an den Ausgang des Pulsbreitenmodulators gelegt ist, der Ausgang aber in den Kreis der Gesamtrückkopplung geschaltet ist.

15. Vorrichtung nach Anspruch 9, dadurch **gekennzeichnet**, daß der elektronische Mehrkanal-Umschalter Kanäle enthält, deren Anzahl der Zahl von Abstufungen der optischen Dichte der Vorlage-Halbtöne entspricht, wobei jeder Kanal einem einstellbaren Schwellenwertkomparator und eine Gruppe von transistorierten Emitterfolgern aufweist.

16. Vorrichtung nach Anspruch 9, dadurch **gekennzeichnet**, daß die Leseeinheit für das Vorlagenbild eine lichtelektrische Leseeinheit darstellt, die unabhängig von der Bewegung der elektromechanischen Baugruppe mit Werkzeug bewegbar angeordnet ist.

17. Vorrichtung nach Anspruch 16, dadurch **gekennzeichnet**, daß die lichtelektrische Leseeinheit und die elektromechanische Baugruppe mit dem Werkzeug mit individuellen Servoantrieben verseben sind.

18. Vorrichtung nach Anspruch 16, dadurch **gekennzeichnet**, daß die lichtelektrische Leseeinheit und. die elektromechanische Baugruppe mit dem Werkzeug mit Geschwindigkeiten bewegbar angeordnet sind, deren Verhältnis den Maßstab der Vergrößerung oder Verkleinerung der Kopie gegenüber der Vorlage bestimmt.

19. Vorrichtung nach Anspruch 9, dadurch **gekennzeichnet**, daß das Werkzeug einen Fräser mit Drehantrieb darstellt.

20. Vorrichtung nach Anspruch 9, dadurch **gekennzeichnet**, daß das Werkzeug eine Elektrode aus einem Draht darstellt, welcher aus einem Material besteht, das farbige Halbtonbilder herzustellen gestattet.

21. Vorrichtung nach Anspruch 9, dadurch **gekennzeichnet**, daß das Werkzeug eine Elektrode für Ultraschall- oder Elektrofunkenbearbeitung darstellt.

22. Vorrichtung nach Anspruch 9, dadurch **gekennzeichnet**, daß das Werkzeug einen Farbspritzapparat darstellt.

23. Vorrichtung nach Anspruch 9, dadurch **gekennzeichnet**, daß das Werkzeug einen Stoßmeißel darstellt.
